(19) Europäisches Patentamt
European Patent Office
Office européen des brevets

(11) Veröffentlichungsnummer: **0 230 909**
**B1**

(12) # EUROPÄISCHE PATENTSCHRIFT

(45) Veröffentlichungstag der Patentschrift: **20.09.89**

(51) Int. Cl.[4]: **C09B 62/09**, C09B 62/513, D06P 1/38

(21) Anmeldenummer: **87100421.4**

(22) Anmeldetag: **14.01.87**

(54) **Wasserlösliche Azoverbindungen, Verfahren zu ihrer Herstellung und ihre Verwendung als Farbstoffe.**

(30) Priorität: **22.01.86 DE 3601722**

(43) Veröffentlichungstag der Anmeldung: **05.08.87 Patentblatt 87/32**

(45) Bekanntmachung des Hinweises auf die Patenterteilung: **20.09.89 Patentblatt 89/38**

(84) Benannte Vertragsstaaten: **BE CH DE FR GB IT LI**

(56) Entgegenhaltungen:
**GB-A- 2 008 144**
**GB-A- 2 008 145**

**D. HILDEBRAND et al Melliand Textilberichte 4,290(1983)**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80(DE)**

(72) Erfinder: **Schläfer, Ludwig, Dr., Königsberger Strasse 40, D-6233 Kelkheim (Taunus)(DE)**
Erfinder: **Springer, Hartmut, Dr., Am Erdbeerstein 27, D-6240 Königstein/Taunus(DE)**
Erfinder: **Kunze, Michael, Dr., Platanenweg 1a, D-6238 Hofheim am Taunus(DE)**

**EP 0 230 909 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die vorgliegende Erfindung liegt auf dem technischen Gebiet der Textilfarbstoffe.

Cellulosefasern und Polyesterfasern können derzeit gemeinsam wegen ihrer unterschiedlichen chemischen Natur nicht mit ein und demselben Farbstoff einheitlich und gleichmäßig gefärbt werden. Man ist gezwungen, gemischte Materialien aus diesen beiden Faserarten, wie beispielsweise Mischgewebe, in einer zweistufigen Verfahrensweise zu färben, nämlich zunächst die eine Faserart mit dem für diese geeigneten Farbstoff, sodann die andere Faserart mit dem für diese zweite Faserart geeigneten Farbstoff, jeweils unter Anwendung unterschiedlicher Verfahrensbedingungen. Solch eine Verfahrensweise ist notwendigerweise langwierig und ersatzbedürftig. Eine andere Verfahrensweise zur Färbung von solchen Mischfasermaterialien beruht auf der Verwendung von Farbstoffgemischen, so einem Gemisch aus einem faserreaktiven Farbstoff zur Anfärbung des Cellulosefaseranteils und einem Dispersionsfarbstoff zur Anfärbung des Polyesterfaseranteils. Da faserreaktive Farbstoffe üblicherweise im alkalischen Medium auf der Cellulosefaser fixieren und Dispersionsfarbstoffe üblicherweise, wie in gewissem Umfange auch die Polyesterfaser, gegen Alkali empfindlich sind, hat diese Verfahrensweise den Nachteil, daß bei der Fixierung der faserreaktiven Farbstoffe im alkalischen Millieu die gleichzeitig vorhandenen Dispersionsfarbstoffe und ebenso die Polyesterfaser geschädigt werden können.

Es hat nicht an Versuchen gefehlt, diese Nachteile auszuschließen, um Cellulosefaser-/Polyesterfaser-Gemische in einem Bad mit einem Reaktivfarbstoff-/Dispersionsfarbstoff-Gemisch anstandslos färben zu können. Diese Möglichkeit wird in einem Artikel auf Seiten 290 ff. in der Zeitschrift Melliand Textilberichte von 1983 beschrieben, und zwar für Farbstoffe mit speziellen Reaktivgruppen, nämlich einer Dichlorchinoxalin- oder Difluorpyrimidin-Gruppe, die Vorteile gegenüber Monochlortriazinfarbstoffe, insbesondere was die Hydrolyseempfindlichkeit im sauren Färbebad betrifft, haben sollen. Der Färbeweise bei einem pH-Wert zwischen 7 und 8 wird allerdings der Vorzug gegeben. Hohe Mengen an Elektrolytzusätzen (Natriumsulfat) sind erforderlich, um die bei hohen Färbetemperaturen absinkende Substantivität der Farbstoffe zu kompensieren.

Farbstoffe mit hoher Substantivität gemäß denen, die in der britischen Patentanmeldungs-Veröffentlichung Nr. 2 008 144A beschrieben sind und die als faserreaktive Reste Halogentriazin-Gruppen und faserreaktive Gruppen der Vinylsulfon-Reihe kombiniert enthalten und eine hohe Substantivität besitzen sollen, sind dennoch für diese Verfahrensweise des Färbens bei hohen Temperaturen im schwach sauren pH-Bereich nicht geeignet, da ihr Fixierverhalten unterhalb des pH-Bereiches von 7 deutlich abnimmt.

Es bestand somit die Aufgabe, diese bisher bekannten Nachteile zu reduzieren oder gar zu beheben, zumal das Färben von Mischgeweben, wie beispielsweise solche aus Cellulose- und Polyesterfasern, zunehmend an Bedeutung gewinnt. Somit besteht auch verstärkt ein Interesse an Farbstoffen, die das Färben von solchen Mischgeweben problemloser machen. Mit der vorliegenden Erfindung wurden nunmehr neue wasserlösliche Verbindungen gefunden, die der nachstehend genannten und definierten allgemeinen Formel (1) entsprechen, faserreaktive Eigenschaften besitzen und sich nicht nur mit Vorteil im alkalischen Bereich zum Färben von Cellulosefasern anwenden lassen, sodern die überraschenderweise auf Cellulosefasern bereits im schwach sauren und neutralen Bereich, nämlich unter den Bedingungen des sogenannten Hochtemperatur-Neutral-Färbeverfahrens (HTN-Verfahren) bei Temperaturen zwischen 100 und 150°C und einem pH-Wert zwischen 4 und 8 in wäßrigem Medium, somit unter Bedingungen des Färbens von Polyesterfasern, zu fixieren vermögen. Durch die Auffindung der neuen Farbstoffe der allgemeinen Formel (1) eröffnet sich die Möglichkeit, die bisher üblichen und gebräuchlichen Dispersionsfarbstoffe zusammen mit diesen neuen Farbstoffen in einstufige Färbeverfahren zur Färbung von Cellulose/Polyester-Fasergemischen einzusetzen, in welchen beide Faserkomponenten gleichmäßig und echt durch die jeweilige Farbstoffart angefärbt werden und Ton-in-Ton-Färbungen erhalten werden können, wenn der angewendete Dispersionsfarbstoff die gleiche Nuance wie der faserreaktive Farbstoff besitzt.

Die neuen faserreaktiven Verbindungen besitzen die allgemeine Formel (1)

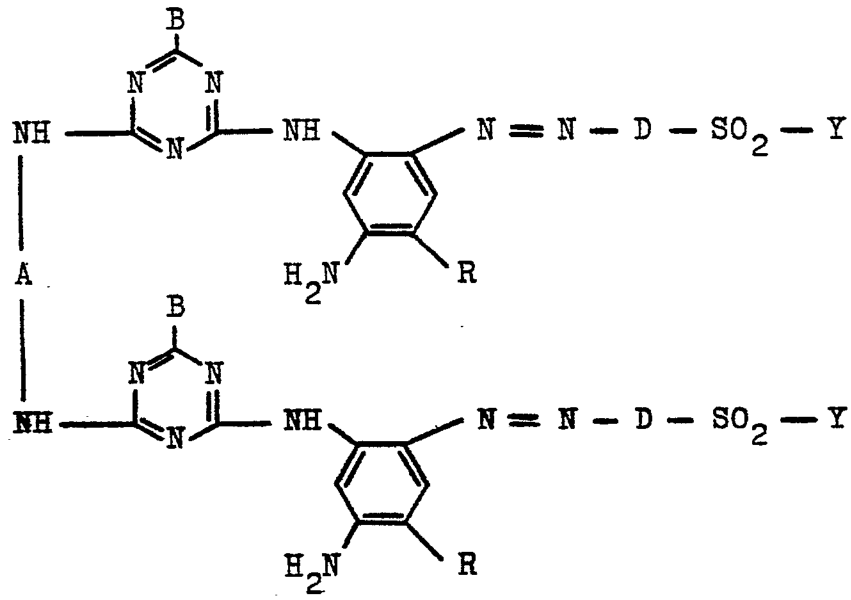

(1)

in welcher die verschiedenen Formelglieder die folgenden Bedeutungen besitzen:
A ist eine geradkettige oder verzweigte, bevorzugt geradkettige, Alkylengruppe von 2 bis 6 C-Atomen oder ein Phenylenrest, der durch 1 oder 2 Substituenten substituiert sein kann, wie beispielsweise durch 1 oder 2 Substituenten aus der Gruppe Alkoxy von 1 bis 4 C-Atomen, wie Methoxy und Ethoxy, Alkyl von 1 bis 4 C-Atomen, wie Methyl und Ethyl, Chlor, Sulfo und Carboxy, wobei insbesondere die Sulfogruppen bevorzugte Substituenten sind, oder
A ist ein Rest der allgemeinen Formel (2)

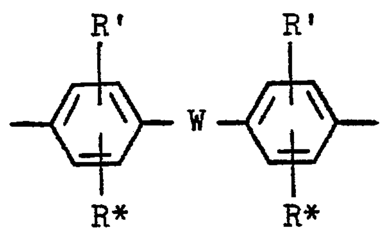

(2)

in welcher
W eine direkte Bindung oder ein Brückenglied ist, wie beispielsweise eine Gruppe der Formel $-CH_2-$ , $-CH_2-CH_2-$ , $-O-CH_2-CH_2-O-$ , -CH=CH- , -N=N- , -NH-CO-NH- oder -CO-NH- , wobei die Gruppen -CH=CH- und -NH-CO-NH- bevorzugt sind und W ebenso bevorzugt eine direkte Bindung bedeutet, und die R' und R*, zueinander gleich oder voneinander verschieden, die R* bevorzugt zu einander gleich, jedes ein Wasserstoffatom, ein Chloratom, eine Methyl-, Methoxy-, Ethoxy-, Carboxy-, oder Sulfogruppe bedeuten, wobei die R' bevorzugt ein Wasserstoffatom sind;
B ist ein Chlor- oder ein Fluoratom, bevorzugt ein Chloratom;
R ist eine Carboxygruppe oder eine Sulfogruppe;
D ist ein Phenylenrest, der durch 1 oder 2 Substituenten aus der Gruppe Chlor, Brom, Alkyl von 1 bis 4 C-Atomen, wie Methyl, Alkoxy von 1 bis 4 C-Atomen, wie Methoxy und Ethoxy, Carboxy und Sulfo substituiert sein kann, oder ist ein Naphthylenrest, wie insbesondere ein in 2-Stellung mit der Azogruppe verbundener Naphthylenrest, der durch 1 oder 2 Sulfogruppen substituiert sein kann;
Y ist die Vinylgruppe oder eine Ethylgruppe, die in β-Stellung durch einen alkalisch eliminierbaren Substituenten substituiert ist, wie beispielsweise durch eine Sulfato-, Phosphato-, Thiosulfato-, Dimethylamino- oder Diethylaminogruppe oder ein Chloratom; bevorzugt ist Y die Vinylgruppe und insbesondere die β-Sulfatoethyl-Gruppe.

Die einzelnen Formelglieder können zueinander gleiche oder voneinander verschiedene Bedeutungen haben. Insbesondere können die jeweils zweifach auftretenden Formelglieder eine zueinander gleiche oder eine voneinander verschiedene Bedeutung haben; bevorzugt haben die Formelrestpaare B, D, R und Y jeweils eine zueinander gleiche Bedeutung.

Im vorstehenden sowie im nachstehenden bedeuten Sulfogruppen Gruppen entsprechend der allgemeinen Formel $-SO_3M$ , in welcher
M ein Wasserstoffatom oder ein Alkalimetall, wie Natrium, Kalium oder Lithium, ist,

des weiteren Carboxygruppen Gruppen der allgemeinen Formel -COOM , Phosphatogruppen Gruppen der allgemeinen Formel $-OPO_3M_2$ , Thiosulfatogruppen Gruppen der allgemeinen Formel $-S-SO_3M$ und Sulfatogruppen Gruppen der allgemeinen Formel $-OSO_3M$ , jeweils mit M der obengenannten Bedeutung.

In den erfindungsgemäßen Verbindungen der allgemeinen Formel (1) ist D bevorzugt ein unsubstituierter Phenylenrest oder ein durch eine Methoxygruppe substituierter Phenylenrest. Die faserreaktive Gruppe der Formel $-SO_2-Y$ ist in den allgemeinen Formeln (1), (3) und (5) bevorzugt in meta- oder para-Stellung zum Stickstoffatom der Amino- bzw. Azogruppe an den Benzolkern gebunden.

Die erfindungsgemäßen Azoverbindungen können in Form ihrer freien Säure und bevorzugt im Form ihrer Alkalisalze, insbesondere der neutralen Salze, vorliegen. Sie finden bevorzugt in Form dieser Salze ihre Verwendung zum Färben und Bedrucken von hydroxy- und/oder carbonamidgruppenhaltigen Fasermaterialien.

Die vorliegende Erfindung betrifft weiterhin Verfahren zur Herstellung der Azoverbindungen der allgemeinen Formel (1). Diese sind dadurch gekennzeichnet, daß man 2 Mol einer aromatischen Aminoverbindung der allgemeinen Formel (3)

$H_2N—D—SO_2-Y$ (3)

in welcher D und Y die obengenannten Bedeutungen haben, oder zwei verschiedene Aminoverbindungen der allgemeinen Formel (3) in äquivalenter Menge diazotiert und mit 1 Mol einer Verbindung der allgemeinen Formel (4)

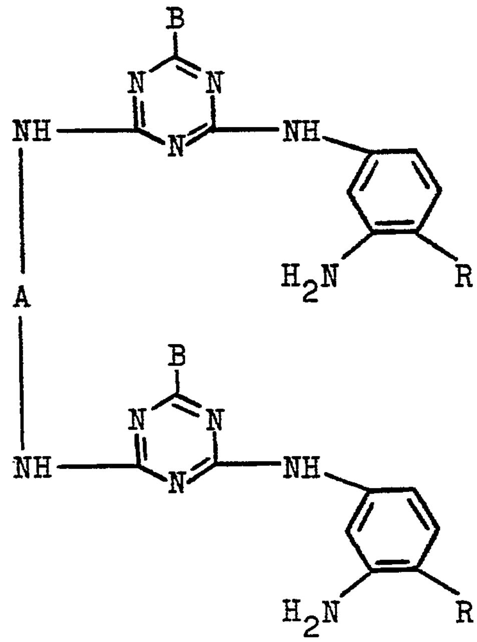

(4)

in welcher A, B und R die obengenannten Bedeutungen haben, analog bekannten Verfahrensweisen, wie beispielsweise in wäßrigem Medium und bei einer Temperatur zwischen -5°C und +30°C und bei einem pH-Wert zwischen 1 und 6, vorzugsweise von 2 bis 3, kuppelt

oder daß man 2 Mol einer Verbindung der allgemeinen Formel (5)

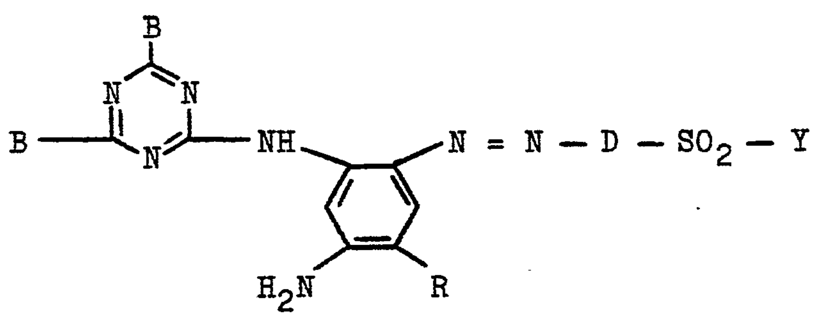

(5)

in welcher B, D, R und Y die obengenannten Bedeutungen haben und beide Formelglieder B eine zueinander gleiche Bedeutung besitzen, oder zwei verschiedene Verbindungen der allgemeinen Formel (5) in äquivalenter Menge mit 1 Mol einer Diaminoverbindung der allgemeinen Formel (6)

$H_2N—A—NH_2$ (6)
in welcher A die obenganannte Bedeutung besitzt, in an und für sich bekannter Verfahrensweise der Umsetzung von Aminoverbindungen mit Dihalogentriazin-Verbindungen kondensiert.

Die Ausgangsverbindungen der allgemeinen Formel (5) gewinnt man nach bekannten Methoden durch Diazotierung einer Verbindung der allgemeinen Formel (3) und Kupplung mit einer Verbindung der allgemeinen Formel (7)

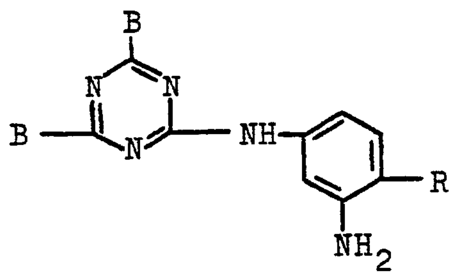
(7)

in welcher B und R die obengenannten Bedeutungen haben und die beiden Formelglieder B eine zueinander gleiche Bedeutung besitzen. Diese Ausgangsverbindung der allgemeinen Formel (7) gewinnt man wiederum nach an und für sich bekannten Verfahrensweisen durch Umsetzung von 1,3-Diaminobenzol-4-sulfonsäure bzw. -carbonsäure mit Cyanurfluorid oder Cyanurchlorid.

Die Ausgangsverbindungen der allgemeinen Formel (4) lassen sich analog an und für sich bekannten Verfahrensweisen durch Umsetzung einer Diaminoverbindung der allgemeinen Formel (6) mit der zweifach molaren Menge einer Verbindung der allgemeinen Formel (7) herstellen.

Die Diazotierung der Verbindungen der allgemeinen Formel (3) erfolgt in an und für sich üblicher Verfahrensweise, so beispielsweise durch Umsetzung von salpetriger Säure in einem wäßrig-sauren Medium, so bei einer Temperatur zwischen -5°C und +10°C und bei einem pH-Wert zwischen 0 und 2. Die Kupplungsreaktionen können ebenfalls in wäßrigem Medium durchgeführt werden, so beispielsweise bei einer Temperatur zwischen -5°C und +30°C und bei einem pH-Wert zwischen 1 und 6, bevorzugt von 2 bis 3.

Die Kondensationsreaktionen zwischen den Dihalogeno-triazinyl-Aminoverbindungen der allgemeinen Formel (4) oder (7) mit den Diaminoverbindungen der allgemeinen Formel (6) erfolgen in üblicher Verfahrensweise, wie sie für diesen Reaktionstyp in der Literatur beschrieben ist, so beispielsweise im wäßrigen oder wäßrig-organischen Medium (wobei die organische Komponente bevorzugt Aceton, Toluol und Ethylenchlorid ist), bei einem pH-Wert zwischen 2 und 6 und bei einer Temperatur zwischen 20 und 60°C. Die Ausgangsverbindungen, die zur Herstellung der erfindungsgemäßen Verbindungen dienen, sind zahlreich in der Literatur beschrieben oder können analog solchen in der Literatur beschriebenen Verbindungen mit den entsprechenden analogen Vorstufen hergestellt werden. Solche Umsetzungen von aroma tischen Aminen Cyanurhalogeniden sind beispielsweise in der deutschen Patentschrift Nr. 485 185 sowie in Journ. Soc. Dyers and Colorists 53, 424 (1937), und in K. Venkataraman, The Chem. of Synth. Dyes, Acad. Press N.Y., Band VI, S. 124-142 (1972), beschrieben.

Die Abscheidung und Isolierung der erfindungsgemäß hergestellten Verbindungen der allgemeinen Formel (1) aus den Syntheselösungen erfolgt nach allgemein bekannten Methoden, so beispielsweise durch Ausfällen aus dem Reaktionsmedium mittels Elektrolyten oder durch Eindampfen der Reaktionslösung, wie beispielsweise durch Sprühtrocknung, wobei der Syntheselösung zuvor jeweils Puffersubstanzen zugefügt werden können.

Die erfindungsgemäßen Verbindungen haben Farbstoffeigenschaften. Infolge der fasereaktiven Gruppen, die sie besitzen, können sie auch als faserreaktive Farbstoffe Verwendung finden. Sie können nach an und für sich üblichen und bekannten Verfahrensweisen der Applikation und Fixierung von faserreaktiven Farbstoffen auf hydroxygruppenhaltigen und/oder carbonamidgruppenhaltigen Materialien, insbesondere Fasermaterialien, zum Färben (einschließlich Bedrucken) eingesetzt werden, so beispielsweise von Wolle, synthetischen Polyamidfasern, insbesondere jedoch von Cellulosefasermaterialien, wie Baumwolle. Solche Verfahrensweisen sind zahlreich in der Fachliteratur, wie auch Patentliteratur, so beispielsweise in der deutschen Offenlegungsschrift Nr. 3 440 265, beschrieben.

Die vorliegende Erfindung betrifft somit auch die Verwendung der erfindungsgemäßen Verbindungen zum Färben (einschließlich Bedrucken von hydroxygruppenhaltigem und/oder carbonamidgruppenhaltigen Materialien, insbesondere Fasermaterialien, bzw. ein Verfahren zum Färben (einschließlich Bedrucken) von solchen Materialien, bei welchem man eine erfindungsgemäße Verbindung aus bevorzugt wäßriger Lösung auf das Material aufbringt und sie auf dem Material mittels Wärme und/oder mit Hilfe eines säurebindenden Mittels - beim Färben von hydroxygruppenhaltigen Materialien vorzugsweise bei einem pH-Wert zwischen 8 und 11 und bei einer Temperatur zwischen 15 und 120°C, vorzugsweise zwischen 20 und 80°C, - fixiert.

Die erfindungsgemäßen Verbindungen haben zudem den großen Vorteil, wie anfangs bereits erwähnt, daß die hydroxygruppenhaltige Fasermaterialien, wie Cellulosefasermaterialien, aus wäßriger Flotte, wie

bevorzugt im wäßrigen Färbebad nach einem Ausziehverfahren, bereits in einem schwach sauren pH-Bereich von 5 und größer als 5, wie bei einem pH-Wert zwischen 5 und 7, d.h. überraschenderweise in Abwesenheit von alkalisch wirkenden Substanzen, gegebenenfalls jedoch in Gegenwart eines üblichen säurebindenden Puffergemisches zur Einstellung und Einhaltung des pH-Bereiches und ggf. in Gegenwart üblicher Färbehilfsmittel, bei einer Temperatur zwischen 100 und 150°C, bevorzugt bei einer Temperatur von 120 bis 135°C, zu färben vermögen und auf diesen Materialien echt fixieren. Solche Puffer sind bspw. wäßrige Lösungen von Phosphorsäure/Natriumphosphat und Essigsäure/Natriumacetat.

Unter diesen Färbebedingungen der Hochtemperatur-Neutral-Färbeweise, die an und für sich bekannt sind (s. deutsche Auslegeschrift Nr. 2 835 035) und die im wesentlichen den Färbebedingungen des Färbens von Polyesterfasern oder anderen synthetischen Fasern, wie Cellulosetriacetatfasern, mit Dispersionsfarbstoffen entsprechen, ist es möglich, Cellulose-Mischfasermaterial, wie Cellulose-Cellulosetriacetatfaser und Cellulose-Polyacrylnitrilfaser- und insbesondere Cellulose-Polyester-Mischfasermaterialien, mit einem üblichen Dispersionsfarbstoff gleichzeitig und zusammen mit einem faserreaktiven Farbstoff, nämlich einer erfindungsgemäßen Azoverbindung, aus einer gemeinsamen wäßrigen Färbeflotte ohne das ansonsten bestehende Risiko der Schädigung des Dispersionsfarbstoffes als auch der synthetischen Faser, wie Polyesterfaser, in einem einstufigen Verfahren mit Vorteil gleichmäßig und echt und gewünschtenfalls Ton-in-Ton zu färben.

Die vorliegende Erfindung betrifft somit auch ein Verfahren zum Färben von Mischfasermaterialien aus Cellulose und synthetischen Fasern, bevorzugt von Cellulose-Polyester-Fasergemischen, mit einem (oder mehreren) Dispersionsfarbstoff(en) und einem oder mehreren erfindungsgemäßen Farbstoff(en) durch Einwirkung dieser Farbstoffe auf das Fasermaterial aus wäßriger Färbeflotte, bevorzugt aus wäßrigem Färbebad, bei einer Temperatur zwischen 100 und 150°C, bevorzugt bei einer Temperatur von 120 bis 135°C, und bei einem pH-Wert zwischen 4 und 8, erforderlichenfalls zwischen 5 bis 7,5, bevorzugt zwischen 5 und 7.

Mit dieser erfindungsgemäßen Färbeweise werden die synthetischen Fasern, wie Polyesterfasern, durch dem Dispersionsfarbstoff und die Cellulosefasern durch die faserreaktive erfindungsgemäße Azoverbindung in der gewünschten guten Qualität gefärbt (hierbei erfolgt keine Anfärbung der synthetischen Faser, wie Cellulosetriacetat und Polyesterfaser, durch die erfindungsgemäßen Azoverbindungen). Die Qualität der Färbung der synthetischen Fasern ist durch den Dispersionsfarbstoff bedingt und entspricht dem Stand der Technik. Überraschenderweise besitzen die Cellulosefasermaterialien, die unter diesen Bedingungen der Färbeweise für Dispersionsfarbstoffe mit den erfindungsgemäßen Azoverbindungen gefärbt wurden, neben einer klaren Nuance beachtliche Echtheitseigenschaften (diese Echtheitseigenschaften sind in jedem Falle vorhanden, wenn die erfindungsgemäßen Azoverbindungen auf den Cellulosefasermaterialien nach den üblichen Verfahrensweisen der Applikation und Fixierung für faserreaktive Farbstoffe im alkalischen Bereich angewendet werden). Von den guten Gebrauchs- und Fabrikationsechtheiten sind insbesondere die guten Licht echtheiten sowohl der trockenen als auch der feuchten, mit Trinkwasser oder einer alkalischen Schweißlösung imprägnierten Cellulosefärbung, weiterhin von dem Naßechtheiten insbesondere die guten Wasch-, Wasser-, Seewasser-, Überfärbe- und Schweißechtheiten sowie die gute Säurelagerbeständigkeit und ebenfalls die guten Plissier-, Bügelecht-, Reib- und Sublimierechtheiten Färbungen auf Cellulosefasematerialien hervorzuheben, die mit den erfindungsgemäßen Azoverbindungen nicht nur bei Anwendung der Verfahrensweisen für faserreaktive Farbstoffe, sondern auch bei Anwendung der Färbeweisen für Dispersionsfarbstoffe erhältlich sind.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säuren geschrieben; im allgemeinen werden sie in Form ihrer Alkalimetallsalze hergestellt und isoliert und in Form dieser Salze zum Färben verwendet. Ebenso können die in den Beispielen, insbesondere Tabellenbeispielen, in Form der freien Säuren genannten Ausgangsverbindungen und Komponenten als solche oder in Form ihrer Salze, vorzugsweise Alkalimetallsalze, wie Natrium- oder Kaliumsalze, in die Synthese eingesetzt werden.

Die in den Beispielen für die erfindungsgemäßen Azoverbindungen im sichtbaren Bereich genannten Absorptionsmaxima ($\lambda_{max}$-Werte) wurden anhand deren Alkalisalze aus wäßriger Lösung ermittelt.

Beispiel 1

a) Eine Lösung von 80,4 Teilen N,N′-Di-(3-sulfo-4-aminophenyl)-harnstoff in 3500 Teilen Wasser gibt man innerhalb von 40 Minuten unter gutem Rühren in ein Gemisch aus 1000 Teilen Eis, 2000 Teilen Wasser, 74 Teilen Cyanurchlorid und 10 Teilen eines handelsüblichen Dispergiermittels. Man rührt noch eine Stunde bei einem pH-Wert von 4 nach und gibt sodann unter Rühren eine neutrale Lösung von 75,3 Teilen 1,3-Diaminobenzol-4-sulfonsäure in 400 Teilen Wasser hinzu, stellt den pH-Wert dieses Ansatzes auf 5 und erwärmt ihn unter Einhaltung des pH-Wertes innerhalb von 3 Stunden auf 60°C und rührt ihn noch eine Stunde bei 60°C nach.

b) In einem getrennten Ansatz diazotiert man in üblicher Weise 4-β-Sulfatoethylsulfonyl-anilin (Einrühren eines Gemisches aus 42 Volumenteilen einer 40%igen wäßrigen Natriumnitritlösung und einer neutralen Lösung von 88,5 Teilen dieser Anilinverbindung in 300 Teilen Wasser auf ein Gemisch von 300 Teilen Eis und 95 Volumenteilen einer wäßrigen konzentrierten Salzsäure). Zu der Diazoniumsalzsuspension gibt man das unter a) hergestellte Kondensationsprodukt als Kupplungskomponente. Die Kupplung wird bei einem pH-Wert zwischen 1,5 und 2,5 und bei einer Temperatur von etwa 10°C durchgeführt. Nach Beendigung der Kupplungsreaktion wird der Ansatz auf einen pH-Wert von 5 gestellt und auf 80°C erwärmt. Man gibt 10% Kaliumchlorid (bezogen auf das Ansatzvolumen) hinzu und läßt ihn unter langsamem Rühren auf 50°C abkühlen. Die erfindungsgemäße Verbindung wird daraus abfiltriert und isoliert.

Man erhält ein gelbes, elektrolytsalzhaltiges Pulver des Alkalimetallsalzes (vorwiegend Kaliumsalzes) der Verbindung der Formel

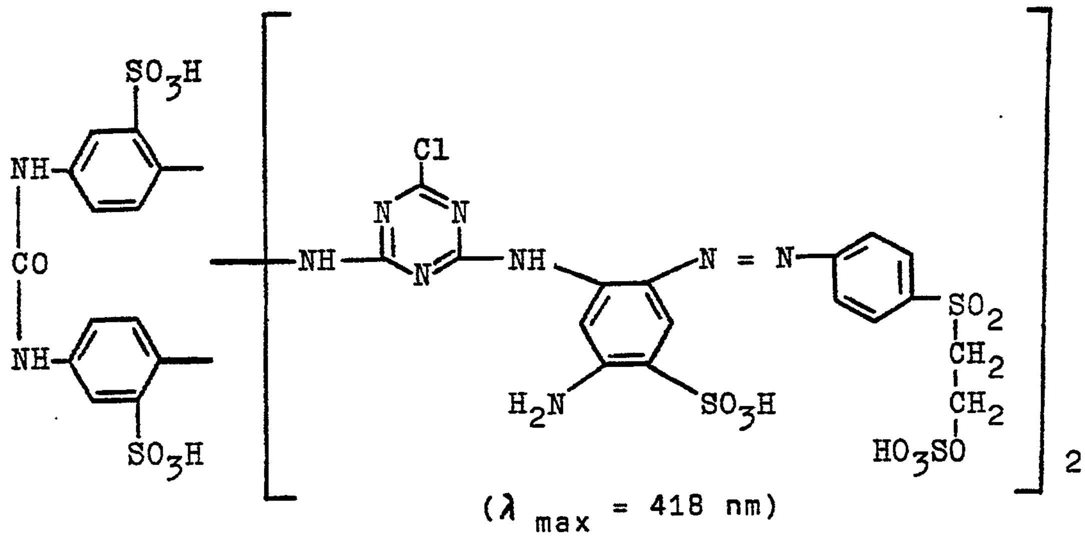

($\lambda_{max}$ = 418 nm)

Die erfindungsgemäße Verbindung zeigt sehr gute faserreaktive Farbstoffeigenschaften und färbt synthetische Polyamidfasern und Wolle, insbesondere jedoch Cellulosefasermaterialien, nach den für faserreaktive Farbstoffe üblichen Applikations- und Fixierverfahren in kräftigen, rotstichig gelben Färbungen mit guten Echtheiten. Insbesondere auf Cellulosefasermaterialien erhält man in Gegenwart von alkalisch wirkenden Substanzen, wie Natriumhydroxid, Natriumbicarbonat und Natriumcarbonat, ebenso in Gegenwart von Natriumtrichloroacetat, beispielsweise aus wäßrigem Färbebad bei 40 bis 80°C auf Cellulosefasermaterialien farbstarke, rotstichig gelbe Färbungen, die die nachstehenden guten Echtheiten besitzen. Desweiteren liefert die erfindungsgemäße Verbindung auch ohne Anwesenheit von Alkali auf Cellulosefasern bei einem pH-Wert zwischen 5 und 7 und bei einer Färbe- und Fixiertemperatur zwischen 110 und 130°C gleich gute farbstarke, rotstichig gelbe Färbungen mit guten Echtheiten, wie beispielsweise guten Lichtechtheiten sowohl der trockenen als auch der mit einer alkalischen Schweißlösung oder mit Trinkwasser imprägnierten Färbung, desweiteren gute Wasch- und Schweißechtheiten, gute Wasser-, Überfärbe- und Abgasechtheiten, ebenso gute Chlorechtheiten und eine gute Säurelagerbeständigkeit.

Beispiel 2

Man gibt innerhalb von 5 Minuten unter gutem Rühren 19,5 Volumenteile Cyanurfluorid in ein Gemisch aus einer neutralen Lösung von 37,6 Teilen 1,3-Diaminobenzol-4-sulfonsäure in 200 Teilen Wasser, 300 Teilen Eis und 1 Teil eines handelsüblichen Dispergiermittels und rührt den Ansats noch 10 Minuten nach. Anschließend gibt man langsam 21,6 Teile feingepulvertes 1,4-Diamonobenzol hinzu und stellt innerhalb einer Stunde das Reaktionsgemisch auf einem pH-Wert von 4. Der Ansatz wird sodann allmählich auf 40°C erwärmt und noch 2 Stunden bei dieser Temperatur nachgerührt.

Dieses Kondensationsprodukt dient als Kupplungskomponente. Der Ansatz wird mit einer gemäß Beispiel 1 b) hergestellten Diazoniumsalzsuspension aus 47,8 Teilen 4-β-Sulfatoethylsulfonyl-anilin versetzt; die Kupplungsreaktion erfolgt bei einem pH-Wert zwischen 1 und 3 und bei einer Temperatur von etwa 10°C. Zur Ausfällung der erfindungsgemäßen Disazoverbindung gibt man 10% Kaliumchlorid (bezogen auf das Reaktionsvolumen) hinzu, stellt den pH-Wert auf 5, erwärmt den Ansatz auf 80°C und läßt ihn sodann unter Rühren erkalten. Die ausgeschiedene erfindungemäße Verbindung wird abgesaugt und getrocknet.

Man erhält ein gelbes, elektrolythaltiges Pulver mit dem Alkalisalz (vorwiegend Kaliumsalz der Verbindung der Formel)

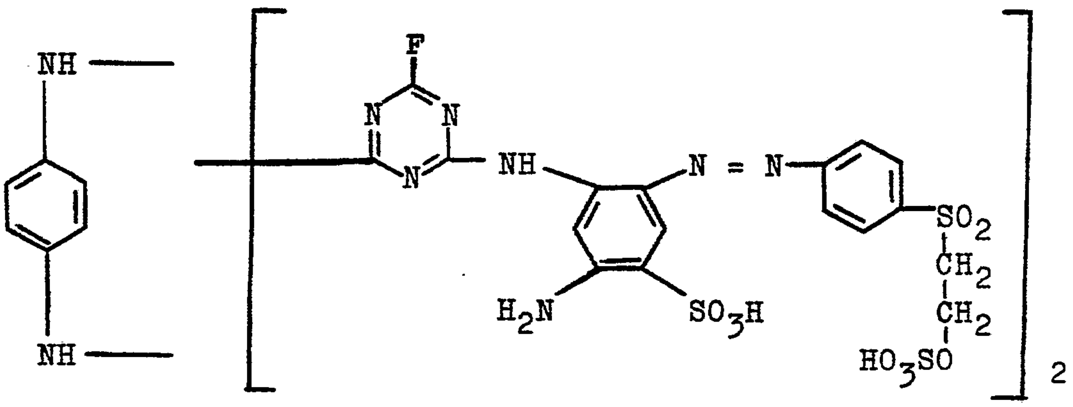

($\lambda_{max}$ = 424 nm)

Die erfindungsgemäße Disazoverbindung besitzt sehr gute faserreaktive Farbstoffeigenschaften und färbt insbesondere Cellulosefasermaterialien sowohl nach den üblichen Fixierverfahren für faserreaktive Farbstoffe unter Anwendung von Alkali als auch ohne Alkalizusatz, so beispielsweise aus wäßriger Flotte bei einer Temperatur zwischen 100 und 130°C und einem pH-Wert zwischen 5 und 7, in farbstarken, echten, rotstichig gelben Tönen.

Beispiel 3

Man gibt unter gutem Rühren innerhalb von 15 Minuten eine neutrale Lösung von 37,6 Teilen 1,3-Diaminobenzol-4-sulfonsäure in 200 Teilen Wasser zu einem Gemisch aus 37 Teilen Cyanurchlorid, 100 Teilen Wasser, 200 Teilen Eis und 1 Teil eines handelsüblichen Dispergiermittels; der Reaktionsansatz wird noch 1 Stunde nachgerührt und sodann mit einer Diazoniumsalzsuspension aus 48 Teilen 4-β-Sulfatoethyl-sulfonyl-anilin versetzt. Die Kupplungsreaktion wird bei einem pH-Wert zwischen 1,5 und 2,5 und bei einer Temperatur von etwa 10°C durchgeführt.

Zu der Lösung der so hergestellten Dichlortriazinylamino-Azoverbindung gibt man 26,8 Teile 2,2'-Disulfo-4,4'-diamino-diphenyl in neutraler wäßriger Lösung und führt die Kondensationsreaktion bei 50 bis 60°C und bei einem pH-Wert zwischen 4,5 und 5,5 mehrere Stunden bis zur Beendigung der Reaktion durch.

Man isoliert die erfindungsgemäße Verbindung durch Aussalzen mit Kaliumchlorid. Sie besitzt, in Form der freien Säure geschrieben, die Formel

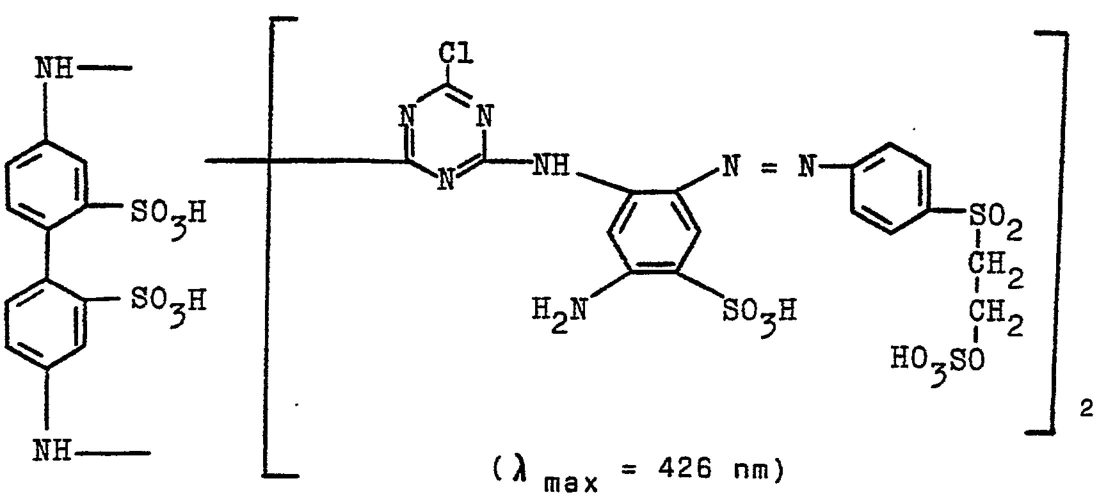

($\lambda_{max}$ = 426 nm)

und liefert sowohl nach den in der Technik für faserreaktive Farbstoffe üblichen Applikations- und Fixierverfahren als auch ohne Zusatz eines Alkalis, wie beispielsweise aus wäßriger Flotte bei einer Temperatur zwischen 110 und 130°C und einem pH-Wert zwischen 5 und 7, auf Cellulosefasermaterialien

farbkräftige, gelbsichtig braune Färbungen mit guten Gebrauchs- und Fabrikationsechtheiten, wie insbesondere guten

Beispiele 4 bis 26

Mit den nachfolgenden Tabellenbeispielen werden weitere erfindungsgemäße Disazoverbindungen entsprechend der oben genannten allgemeinen Formel (1) mit Hilfe derer Komponenten beschrieben. Sie lassen sich in erfindungsgemäßer Weise, so beispielsweise nach einem der obigen Ausführungsbeispiele, herstellen und liefern beispielsweise auf Cellulosefasermaterialien, wie Baumwolle, nach den für faserreaktive Farbstoffe üblichen Applikations- und Fixierverfahren farbstarke echte Färbungen und Drucke mit den für das jeweilige Tabellenbeispiel angegebenen Farbton. Färbungen auf Cellulosefasermaterialien mit gleich guten Farbstärken und gleich guten Echtheiten werden ebenso bei den Färbebedingungen für das Färben von Polyesterfasern mit Dispersionsfarbstoffen, wie beispielsweise auf wäßrigem Bad bei einer Temperatur zwischen 100 und 130°C und einem pH-Wert zwischen 5 und 8, gegebenenfalls unter Zusatz eines Elektrolytsalzes, wie Natriumsulfat oder Natriumchlorid, erhalten.

| Bsp. | Azoverbindungen der allgemeinen Formel (1) mit ... Komponente A | B | Substituent R | Diazokomponente (3) | Nuance auf Baumwolle |
|---|---|---|---|---|---|
| 4 | 1,4-Phenylen | Cl | Sulfo | 4-(ß-Sulfatoethylsulfonyl)-anilin | rotstichig gelb (422 nm) |
| 5 | dito | Cl | Sulfo | 3-(ß-Sulfatoethylsulfonyl)-anilin | rotstichig gelb |
| 6 | dito | Cl | Carboxy | 4-(ß-Sulfatoethylsulfonyl)-anilin | rotstichig gelb |
| 7 | dito | F | Sulfo | 4-Vinylsulfonyl-anilin | rotstichig gelb |
| 8 | dito | F | Sulfo | 2-Methoxy-5-vinylsulfonyl-anilin | gelbbraun |
| 9 | dito | F | Sulfo | 2-Methoxy-5-(ß-sulfatoethylsulfonyl)-anilin | gelbbraun |
| 10 | dito | F | Sulfo | 6-(ß-Sulfatoethylsulfonyl)-2-amino-naphthalin | gelbbraun |
| 11 | 2,5-Disulfo-1,4-phenylen | F | Sulfo | 6-Vinylsulfonyl-2-amino-naphthalin | gelbbraun |

Azoverbindungen der allgemeinen Formel (1) mit ...

| Bsp. | Komponente A | B | Substituent R | Diazokomponente (3) | Nuance auf Baumwolle |
|---|---|---|---|---|---|
| 12 | 2,2'-Disulfo-4,4'-diphenylen | F | Sulfo | 4-(ß-Sulfatoethylsulfonyl)-anilin | rotstichig gelb (428 nm) |
| 13 | dito | Cl | Carboxy | dito | rotstichig gelb |
| 14 | dito | Cl | Sulfo | 4-Vinylsulfonyl-anilin | rotstichig gelb |
| 15 | 3,3'-Disulfo-4,4'-diphenylen | Cl | Sulfo | dito | rotstichig gelb |
| 16 | dito | Cl | Sulfo | 4-(ß-Sulfatoethylsulfonyl)-anilin | rotstichig gelb |
| 17 | dito | Cl | Sulfo | 2-Methoxy-5-(ß-sulfatoethylsulfonyl)-anilin | rotstichig gelb |
| 18 | dito | Cl | Sulfo | 6-(ß-Sulfatoethylsulfonyl)-2-aminonaphthalin | gelbbraun |
| 19 | dito | F | Sulfo | 4-(ß-Sulfatoethylsulfonyl)-anilin | gelbbraun |

Azoverbindungen der allgemeinen Formel (1) mit ...

| Bsp. | Komponente A | B | Substituent R | Diazokomponente (3) | Nuance auf Baumwolle |
|---|---|---|---|---|---|
| 20 | 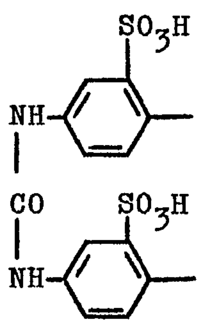 | F | Sulfo | 4-(ß-Sulfatoethylsulfonyl)-anilin | rotstichig gelb (420 nm) |
| 21 | dito | Cl | Carboxy | dito | gelbbraun |
| 22 | dito | Cl | Sulfo | 2-Methoxy-5-(ß-sulfatoethyl-sulfonyl)-anilin | rotstichig gelb |
| 23 | dito | Cl | Sulfo | 6-(ß-Sulfatoethylsulfonyl)-2-aminonaphthalin | gelbbraun |
| 24 | 3,3'-Dicarboxy-4,4'-diphenylen | Cl | Sulfo | 4-(ß-Sulfatoethylsulfonyl)-anilin | rotstichig gelb |
| 25 | 3,3'-Dimethoxy-4,4'-diphenylen | Cl | Sulfo | 1-Sulfo-6-(ß-sulfatoethyl-sulfonyl)-2-aminonaphthalin | rotstichig gelb |
| 26 | dito | Cl | Sulfo | 2-Sulfo-4-(ß-sulfatoethyl-sulfonyl)-anilin | gelbbraun |

Färbebeispiel 1

50 Teile eines Baumwollgewebes gibt man in ein Färbebad aus 1 Teil der erfindungsgemäßen Disazoverbindung von Beispiel 1 (in Form des neutralen Salzes), 50 Teilen wasserfreiem Natriumsulfat, 800 Teilen Wasser und 200 Teilen einer wäßrigen Pufferlösung, die aus 200 Teilen Wasser und 20 Teilen 85%iger Phosphorsäure zubereitet und mit Natronlauge auf einen pH-Wert von 6 gestellt wird. Das Gewebe wird in dem Bad bei einer Temperatur von 130°C während 90 Minuten unter ständiger Bewegung behandelt. Anschließend wird die erhaltene Färbung durch Spülen mit warmem und mit heißem Wasser, durch Waschen in einem wäßrigen Bad aus 1500 Teilen Wasser und 1,5 Teilen eines nichtionogenen Mittels bei Kochtemperatur während 15 Minuten und durch erneutes Spülen mit warmem Wasser nachbehandelt und getrocknet. Es wird eine kräftige rotstichig gelbe Färbung erhalten, die die in Beispiel 1 angegebenen guten Echtheiten besitzt und darüberhinaus einen guten Farbaufbau in diesem Färbeverfahren aufweist.

Führt man das Färbeverfahren nicht bei einem pH-Wert von 6, sondern bei einem pH-Wert von 5, von 7 oder 8 durch, so erhält man gleichgute rotstichig gelbe Färbungen mit praktisch gleicher Farbstärke wie bei der bei pH 6 hergestellten Färbung.

Färbebeispiel 2

Setzt man die erfindungsgemäße Disazoverbindung des Beispieles 1 zum Färben von Cellulosefasermaterial, wie Baumwollgewebe, nach einem für faserreaktive Farbstoffe üblichen Färbeverfahren ein, wie beispielsweise im Ausziehverfahren bei einer Temperatur von 60°C oder 80°C in Gegenwart eines alkalisch wirkenden Mittels, wie Natriumcarbonat und Natronlauge, und eines Elektrolytsalzes, wie Natriumsulfat, so erhält man ebenfalls sehr farbstarke rotstichig gelbe Färbungen mit dem in Beispiel 1 genanntgen guten Eigenschaften.

Färbebeispiel 3

100 Teile eines Mischgewebes aus gleichen Teilen Polyester- und Cellulosefasern wird in der üblichen Färbemethode für Polyesterfasern in 2000 Teilen eines neutralen wäßrigen Bades mit einem Gehalt von 2 Teilen einer Handelsware von C.I. Disperse Orange 29 (Colour Index Nr. 26 077) und 2 Teilen des erfindungsgemäßen Disazofarbstoffes von Beispiel 4 90 Minuten bei 130°C gefärbt. Man erhält ein egal und stark durchgefärbtes Gewebe von gleichmäßiger gelbstichig orangeroter Nuance.

Führt man die Färbung nur mit dem Dispersionsfarbstoff durch, so werden lediglich die Polyester-Schußfäden gefärbt, so daß das Gewebe unegal und schwach gelbbraun erscheint.

Einen ähnlichen Eindruck erweckt das gefärbte Gewebe, das man in gleicher Verfahrensweise erhält, wenn lediglich die erfindungsgemäße Disazoverbindung in das Färbebad eingesetzt wird, da in diesem Falle nur die aus Cellulosefasern bestehenden Kettfäden angefärbt werden.

**Patentansprüche**

1. Wasserlösliche Verbindung entsprechend der allgemeinen Formel (1)

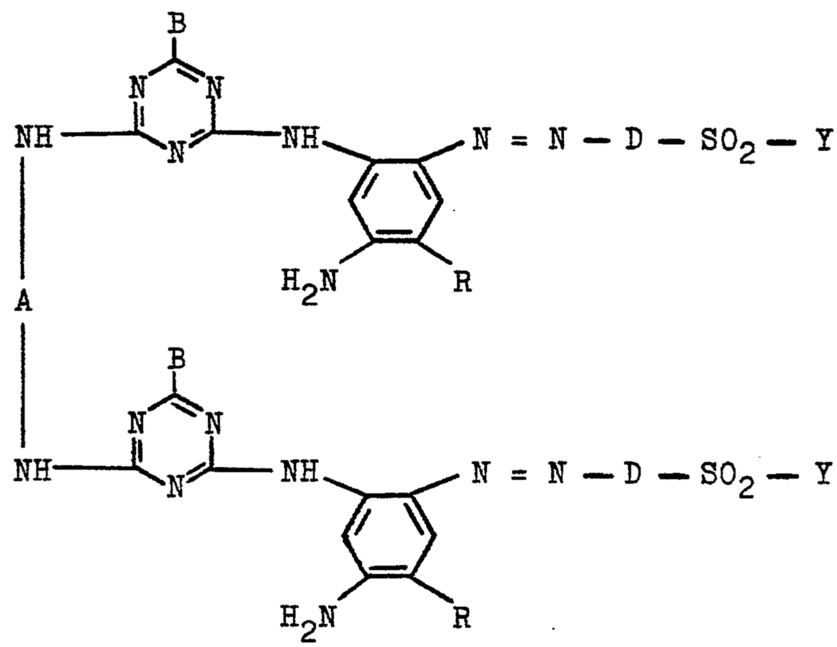

(1)

in welcher bedeuten:
A ist eine Alkylengruppe von 2 bis 6 C-Atomen oder ein Phenylenrest, der durch 1 oder 2 Substituenten substituiert sein kann, oder ist ein Rest der allgemeinen Formel (2)

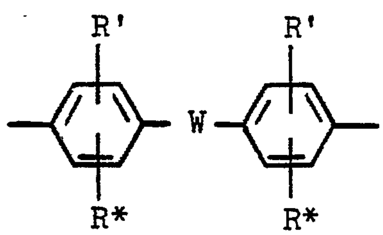

(2)

in welcher
W eine direkte Bindung oder ein Brückenglied ist und die R' und R* jedes ein Wasserstoffatom, ein Chloratom, eine Methyl-, Methoxy-, Ethoxy-, Carboxy- oder Sulfogrupe bedeuten;
B ist ein Chlor- oder ein Fluoratom;
R ist eine Carboxy- oder Sulfogruppe;
D ist ein Phenylenrest, der durch 1 oder 2 Substituenten aus der Gruppe Chlor, Brom, Alkyl von 1 bis 4 C-Atomen, Alkoxy von 1 bis 4 C-Atomen, Carboxy und Sulfo substituiert sein kann, oder ist ein Naphthylenrest, der durch 1 oder 2 Sulfogruppen substituiert sein kann;
Y ist die Vinylgruppe oder eine Ethylgruppe, die in β-Stellung durch einen alkalisch eliminierbaren Substituenten substituiert ist.

2. Verbindung nach Anspruch 1, dadurch gekennzeichnet, daß die zweifach auftretenden Formelglieder jeweils die gleiche Bedeutung besitzen.

3. Verbindung nach Anspruch 1 oder 2, dadurch gekennzeichnet, daß die Formelglieder B jedes ein Chloratom bedeuten.

4. Verbindung nach Anspruch 1 oder 2 der allgemeinen Formel (1), in welcher
A eine Alkylengruppe von 2 bis 6 C-Atomen oder ein Phenylenrest, der durch 1 oder 2 Substituenten aus der Gruppe Alkoxy von 1 bis 4 C-Atomen, Alkyl von 1 bis 4 C-Atomen, Chlor, Sulfo und Carboxy substituiert sein kann, ist, oder
A ein Rest der allgemeinen Formel (2a)

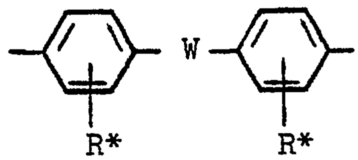

(2a)

ist, in welcher W eine direkte Bindung oder ein Brückenglied der Formel $-CH_2-$ , $-CH_2-CH_2-$ , $-O-CH_2-CH_2-O-$ , -CH=CH- , -N=N- , -NH-CO-NH- oder -CO-NH- ist und die R*, zueinander gleich oder voneinander verschieden, jedes ein Wasserstoffatom, ein Chloratom, eine Methyl-, Methoxy-, Ethoxy-, Carboxy- oder Sulfogruppe bedeuten,
B ein Chloratom ist und
D, R und Y die in Anspruch 1 genannten Bedeutungen haben.

5. Verbindung nach mindestens einem der Ansprüche 1 bis 4, dadurch gekennzeichnet, daß der Rest D ein Phenylenrest ist, der durch 1 oder 2 Substituenten aus der Gruppe Chlor, Brom, Alkyl von 1 bis 4 C-Atomen, Alkoxy von 1 bis 4 C-Atomen, Carboxy und Solfo substituiert sein kann.

6. Verbindung nach mindestens einem der Ansprüche 1 bis 5, dadurch gekennzeichnet, daß Y die Vinylgruppe oder eine β-Sulfatoethyl-, β-Phosphatoethyl-, β-Thiosulfatoethyl-, β-Dimethylamino-ethyl-, β-Diethylamino-ethyl- oder β-Chlorethyl-Gruppe ist.

7. Verbindung nach mindestens einem der Ansprüche 1 bis 5, dadurch gekennzeichnet, daß Y eine Vinylgruppe oder eine β-Sulfatoethyl-Gruppe ist.

8. Verbindung nach mindestens einem der Ansprüche 1 bis 4, 6 und 7, dadurch gekennzeichnet, daß D ein unsubstituierter Phenylenrest oder ein durch eine Methoxygruppe substituierter Phenylenrest ist.

9. Verfahren zur Herstellung einer in Anspruch 1 genannten und definierten Azoverbindung der allgemeinen Formel (1), dadurch gekennzeichnet,
daß man 2 Moleküle einer aromatischen Aminoverbindung der allgemeinen Formel (3)
$H_2N—D—SO_2-Y$ (3)
in welcher D und Y die in Anspruch 1 genannten Bedeutungen haben, oder je 1 Molekül von zwei verschiedenen Aminoverbindungen der allgemeinen Formel (3) diazotiert und mit 1 Molekül einer Verbindung der allgemeinen Formel (4)

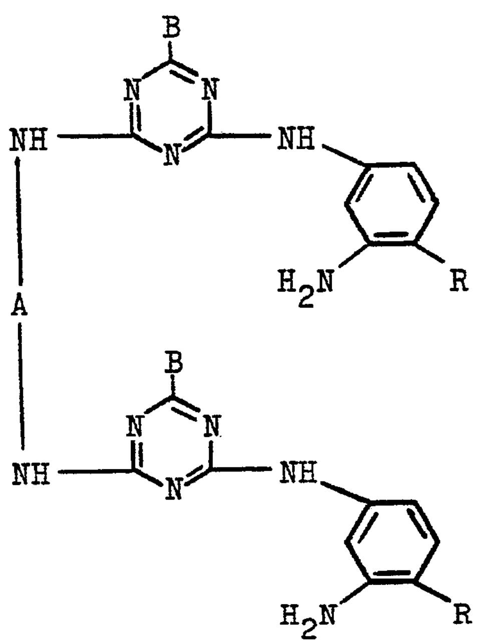

(4)

in welcher A, B and R die in Anspruch 1 genannten Bedeutungen haben, kuppelt
oder daß man 2 Moleküle einer Verbindung der allgemeinen Formel (5)

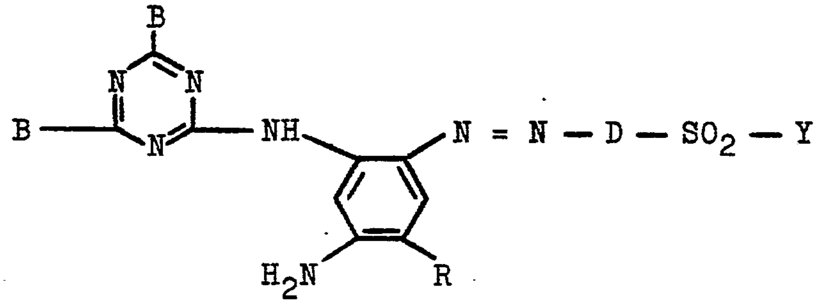

(5)

in welcher B, D, R und Y die in Anspruch 1 genannten Bedeutungen haben und beide Formelglieder B eine zueinander gleiche Bedeutung besitzen, oder je 1 Molekül von zwei verschiedenen Verbindungen der allgemeinen Formel Formel (5) mit 1 Molekül einer Diaminoverbindung der allgemeinen Formel (6)

$H_2N—A—NH_2$ (6)

in welcher A die in Anspruch 1 genannte Bedeutung besitzt, kondensiert.

10. Verwendung einer in Anspruch 1 genannten und definierten Verbindung der allgemeinen Formel (1) als Farbstoff.

11. Verwendung nach Anspruch 10 zum Färben von hydroxy- und/oder carbonamidgruppenhaltigem Material, vorzugsweise Fasermaterial.

12. Verwendung nach Anspruch 11, dadurch gekennzeichnet, daß das Fasermaterial ein Cellulosefaser-Polyesterfaser-Gemisch oder ein Cellulosefaser-Celluloseacetatfaser-Gemisch ist.

13. Verfahren zum Färben (einschließlich Bedrucken) von hydroxy- und/oder carbonamidgruppenhaltigem Material, vorzugsweise Fasermaterial, bei welchem man einen Farbstoff auf das Material aus wäßriger Lösung aufbringt und ihn mittels Wärme und/oder mit Hilfe eines alkalisch wirkenden Mittels fixiert, dadurch gekennzeichnet, daß man als Farbstoff eine Verbindung von Anspruch 1 einsetzt.

14. Verfahren zum Färben von hydroxygruppenhaltigem Fasermaterial, vorzugsweise Cellulosefasermaterial, dadurch gekennzeichnet, daß man eine Verbindung von Anspruch 1 auf das Material in wäßriger Lösung aufbringt und sie aus der wäßrigen Lösung bei einem pH-Wert zwischen 4 und 8 und bei einer Temperatur zwischen 100 und 150°C auf das Material einwirken läßt und auf dem Material fixiert.

15. Verfahren nach Anspruch 14, dadurch gekennzeichnet, daß man bei einem pH-Wert zwischen 5 und 7,5 färbt.

16. Verfahren nach Anspruch 14 oder 15, dadurch gekennzeichnet, daß man als Fasermaterial ein Cellulosefaser-Polyesterfaser-Gemisch oder ein Cellulosefaser-Cellulosetriacetatfaser-Gemisch einsetzt.

17. Verfahren nach Anspruch 16, dadurch gekennzeichnet, daß man zusätzlich einen Dispersionsfarbstoff einsetzt.

## Claims

1. A water-soluble compound of the general formula (1)

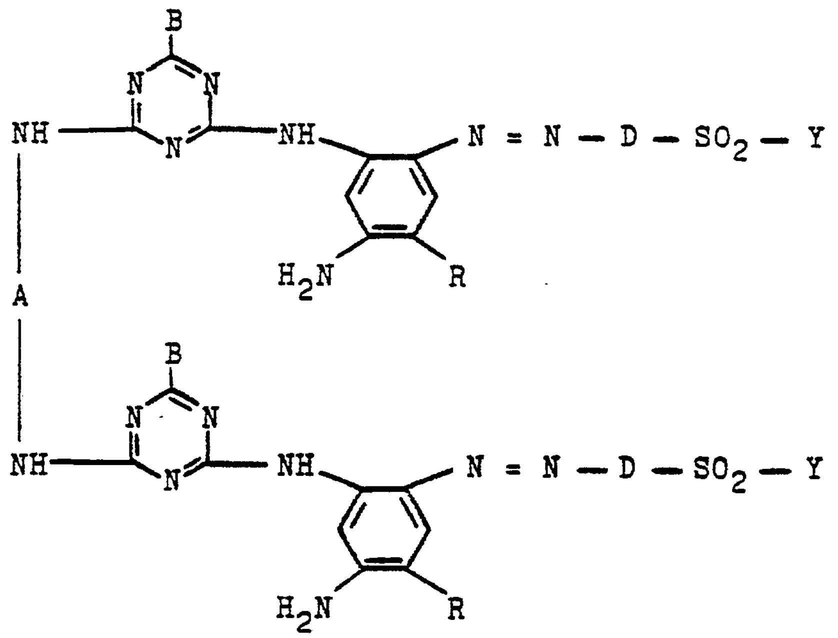

(1)

in which:
A is an alkylene group of 2 to 6 carbon atoms or a phenylene radical which can be substituted by 1 or 2 substituents, or is a radical of the general formula (2)

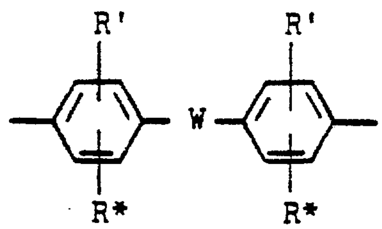

(2)

in which
W is a direct bond or a bridge member and R', and R* each denote a hydrogen atom, a chlorine atom, a methyl, methoxy, ethoxy, carboxyl or sulfo group;
B is a chlorine or a fluorine atom;
R is a carboxyl or sulfo group;
D is a phenylene radical which can be substituted by 1 or 2 substituents from the group composed of chlorine, bromine, alkyl of 1 to 4 carbon atoms, alkoxy or 1 to 4 carbon atoms, carboxyl and sulfo, or is a naphthylene radical which can be substituted by 1 or 2 sulfo groups;
Y is a vinyl group or an ethyl group which is substituted in the ß-position by a substituent which can be eliminated by alkaline.

2. The compound as claimed in claim 1, wherein the formula members which occur twice have the same meaning in each case.

3. The compound as claimed in claim 1 or 2, wherein the formula members B each denote a chlorine atom.

4. The compound as claimed in claim 1 or 2 of the general formula (1) in which
A is an alkylene group of 2 to 6 carbon atoms or a phenylene radical which can be substituted by 1 or 2 substituents from the group composed of alkoxy of 1 to 4 carbon atoms, alkyl of 1 to 4 carbon atoms, chlorine, sulfo and carboxyl, or
A is a radical of the general formula (2a)

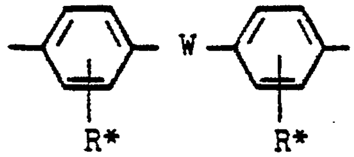

(2a)

in which
W is a direct bond or a bridge member of the formula
$-CH_2-$, $-CH_2-CH_2-$, $-O-CH_2-CH_2-O-$, $-CH=CH-$, $-N=N-$, $-NH-CO-NH-$ or $-CO-NH-$
and each radical R*, identical to or different to one another, denotes a hydrogen atom, a chlorine atom, a methyl, methoxy, ethoxy, carboxyl or sulfo group,
B is a chlorine atom and
D, R and Y have the meanings given in claim 1.

5. A compound as claimed in at least one of claims 1 to 4, wherein the radical D is a phenylene radical which can be substituted by 1 or 2 substituents from the group composed of chlorine, bromine, alkyl of 1 to 4 carbon atoms, alkoxy of 1 to 4 carbon atoms, carboxyl and sulfo.

6. The compound as claimed in at least one of claims 1 to 5, wherein Y is a vinyl group or a ß-sulfatoethyl, ß-phosphatoethyl, ß-thiosulfatoethyl, ß-dimethylaminoethyl, ß-diethylaminoethyl or a ß-chloroethyl group.

7. The compound as claimed in at least one of claims 1 to 5, wherein Y is a vinyl group or a ß-sulfatoethyl group.

8. The compound as claimed in at least one of claims 1 to 4, 6 and 7, wherein D is an unsubstituted phenylene radical or a phenylene radical substituted by a methoxy group.

9. A process for the preparation of an azo compound as claimed and defined in claim 1 of the general formula (1), which comprises diazotizing 2 molecules of an aromatic amino compound of the general formula (3)
$H_2N-D-SO_2-Y$ (3)
in which D and Y have the meanings given in claim 1, or 1 molecule each of two different amino compounds of the general formula (3) and coupling the product with 1 molecule of the compound of the general formula (4)

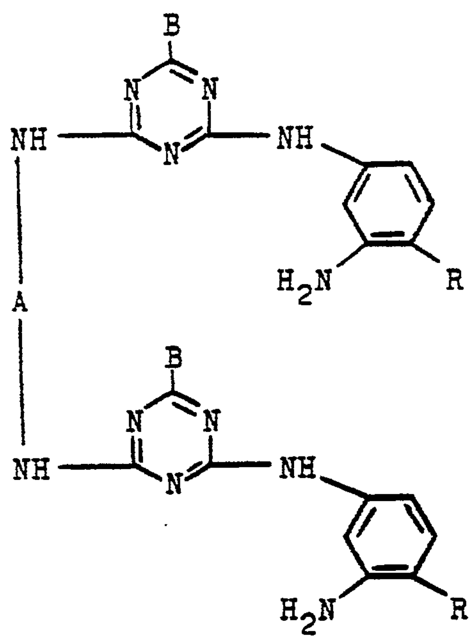

(4)

in which A, B and R have the meanings given in claim 1, or condensing 2 molecules of a compound of the general formula (5)

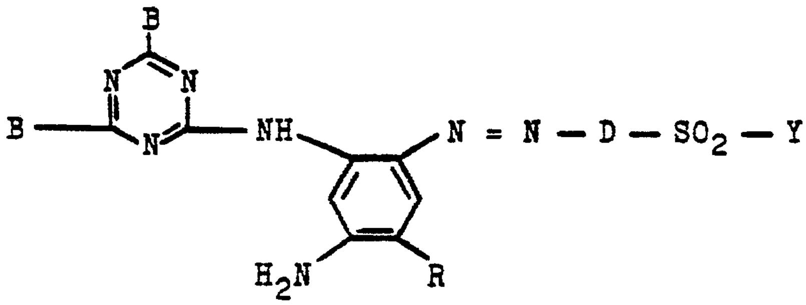
(5)

in which B, D, R and Y have the meanings given in claim 1 and both formula members B have a meaning identical to one another, or 1 molecule each of two different compounds of the general formula (5) with 1 molecule of a diamino compound of the general formula (6)
$H_2N\text{-}A\text{-}NH_2$ (6)
in which A has the meaning given in claim 1.

10. Use of the compound as claimed and defined in claim of the general formula (1) as dye.

11. The use as claimed in claim 10 for the dyeing of hydroxyl- and/or carboxamido-containing material, preferably fiber material.

12. The use as claimed in claim 11, wherein the fiber material is a cellulose fiber/polyester fiber mixture or a cellulose fiber/cellulose acetate fiber mixture.

13. A process for the dyeing (including printing) of hydroxyl- and/or carboxamido-containing material, preferably fiber material, in which a dye is applied to the material from an aqueous solution and fixed by means of heat and/or by means of an alkaline agent, wherein the dye used is the compound as claimed in claim 1.

14. A process for the dyeing of hydroxyl-containing fiber material, preferably cellulose fiber material, which comprises applying the compound as claimed in claim 1 to the material in aqueous solution and allowing it to act on the material from an aqueous solution at a pH between 4 and 8 and at a temperature between 100 and 150°C and fixing it on the material.

15. The process as claimed in claim 14, wherein the dyeing is carried out at a pH between 5 and 7.5.

16. The process as claimed in claim 14 or 15, wherein the fiber material used is a cellulose fiber/polyester fiber mixture or a cellulose fiber/cellulose triacetate fiber mixture.

17. The process as claimed in claim 16, wherein additionally a disperse dye is used.

**Revendications**

1. Composés solubles dans l'eau qui répondent à la formule générale (1) ci-dessous:

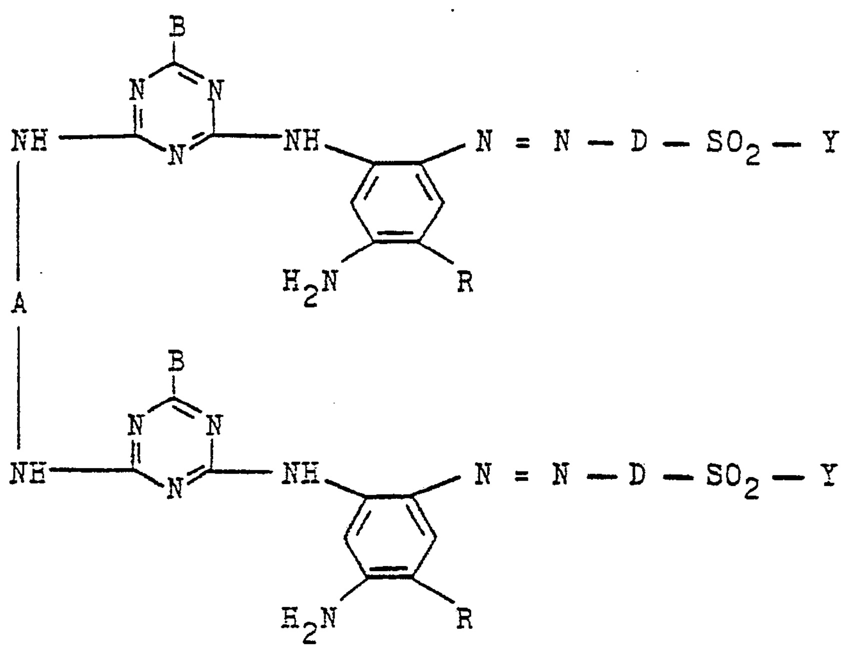
(1)

dans laquelle:

A désigne un alkyléne en $C_2$ à $C_6$ ou un phénylène, pouvant avoir un ou deux substituants, ou bien un radical de formule (2):

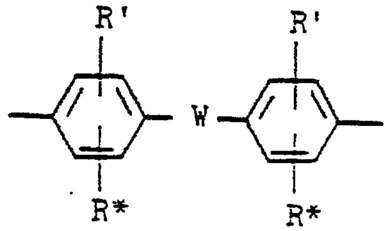

(2)

dans laquelle:
W représente une liaison directe ou un pont et les symboles R' et R* représentent chacun un atome d'hydrogène ou de chlore ou un groupe méthyle, méthoxy, éthoxy, carboxy ou sulfo;
B est un atome de chlore ou de fluor;
R est un groupe carboxy ou sulfo;
D est un radical phénylène pouvant avoir 1 ou 2 substituants choisis parmi le chlore et le brome, des alkyles et alcoxy en $C_1$ à $C_4$ et les groupes carboxy et sulfo, ou bien un radical naphtylène pouvant porter 1 ou 2 groupes sulfo; et
Y est le groupe vinyle ou un groupe éthyle, avec à la position ß un substituant éliminable par un alcali.

2. Composé selon la revendication 1 caractérisé en ce que les symboles qui apparaissent deux fois dans la formule ont chaque fois la même signification.

3. Composé selon la revendication 1 ou 2 caractérisé en ce que les deux symboles B désignent chacun un atome de chlore.

4. Composé selon la revendication 1 ou 2 de formule générale (1), dans lequel:
A est un alkylène en $C_2$ à $C_6$ ou un phénylène, pouvant avoir 1 ou 2 substituants choisis parmi des groupes alcoxy et alkyles en $C_1$ à $C_4$, le chlore et les groupes sulfo et carboxy, ou bien:
A est un radical de formule (2a):

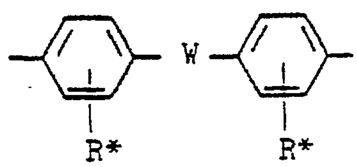

(2a)

dans laquelle W représente une liaison directe ou un pont tel que le groupe $-CH_2-$, $-CH_2-CH_2-$, $-O-CH_2-CH_2-O-$, $-CH{=}CH-$, $-N{=}N-$, $-NH-CO-NH-$ ou $-CO-NH-$ et les deux symboles R*, qui peuvent être identiques ou différents l'un de l'autre, représentent chacun un atome d'hydrogène ou de chlore ou un groupe méthyle, méthoxy, éthoxy ou sulfo;
B est un atome de chlore et
D, R et Y ont les significations qui ont été données à la revendication 1.

5. Composé selon l'une ou plusieurs des revendications 1 à 4, caractérisé en ce que le radical D est un radical phénylène pouvant avoir 1 ou 2 substituants choisis parmi le chlore, le brome, des alkyles et alcoxy en $C_1$ à $C_4$ et les groupes carboxy et sulfo.

6. Composé selon l'une ou plusieurs des revendications 1 à 5, caractérisé en ce que Y est le groupe vinyle, ou un groupe ß-sulfatoéthyle, ß-phosphatoéthyle, ß-thiosulfatoéthyle, ß-diméthylamino-éthyle, ß-diéthyl-aminoéthyle ou ß-chloroéthyle.

7. Composé selon l'une ou plusieurs des revendications 1 à 5, caractérisé en ce que Y est le groupe vinyle ou un groupe ß-sulfatoéthyle.

8. Composé selon l'une ou plusieurs des revendications 1 à 4, 6 et 7, caractérisé en ce que D est un radical phénylène ou méthoxy-phénylène.

9. Procédé de préparation des composés azoïques de formule (1) définis à la revendication 1, procédé caractérisé en ce que:
on diazote 2 molécules d'un composé aminé aromatique de formule (3):
$H_2N-D-SO_2-Y$ (3)
ou une molécule de chacun de deux composés aminés différents de formule (3) et on copule le composé de diazonium avec une molécule d'un composé de formule (4):

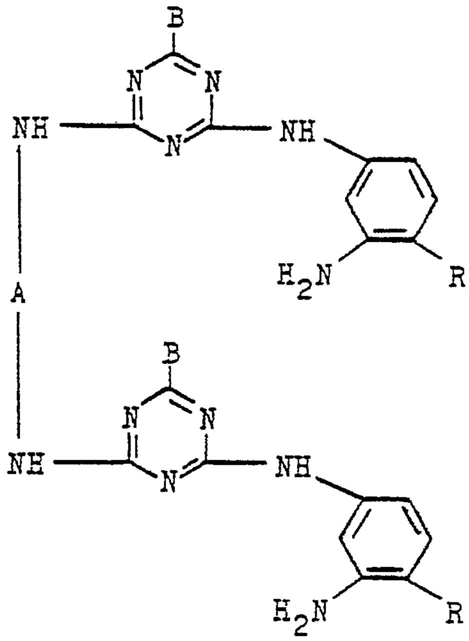

(4)

ou bien on condense 2 molécules d'un composé de formule (5):

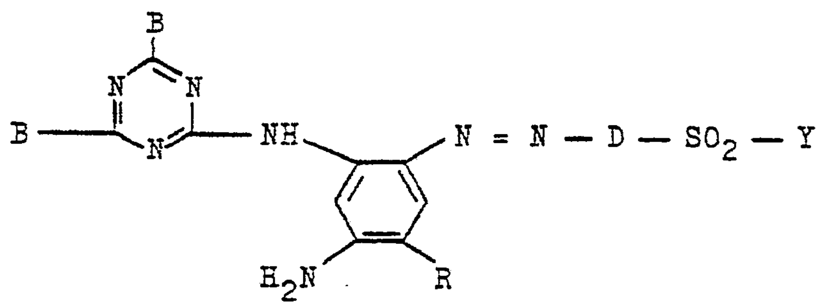

(5)

les deux symboles B ayant la même signification, ou une molécule de chacun de deux composés différents de formule (5), avec une molécule d'une diamine de formule (6):

$H_2N-A-NH_2$ (6)

10. L'emploi comme matières colorantes des composés de formule (1) selon la revendication 1.

11. Emploi selon la revendication 10 pour la teinture de matières ayant des groupes hydroxyliques et/ou carboxamides, de préférence de matières fibreuses.

12. Emploi selon la revendication 11 caractérisé en ce que la matière fibreuse est constituée d'un mélange de fibres de cellulose et de fibres d'un polyester ou d'un mélange de fibres de cellulose et de fibres d'acétate de cellulose.

13. Procédé de teinture (et impression) d'une matière à groupes hydroxyliques et/ou carboxamides, de préférence d'une matière fibreuse, dans lequel on applique un colorant sur cette matière à partie d'une solution aqueuse et on le fixe sous l'action de la chaleur et/ou avec un agent alcalin, procédé caractérisé en ce que l'on utilise comme colorant un composé selon la revendication 1.

14. Procédé de teinture de matières fibreuses à groupes hydroxyliques, de préférence de matières fibreuses cellulosiques, procédé caractérisé en ce que l'on applique sur la matière un composé selon la revendication 1 en solution aqueuse et on le laisse agir en solution aqueuse sur la matière à un pH de 4 à 8 et à une température de 100 à 150°C, et on le fixe sur la matière.

15. Procédé selon la revendication 14 caractérisé en ce que l'on effectue la teinture à un pH compris entre 5 et 7,5.

16. Procédé selon la revendication 14 ou 15 caractérisé en ce que la matière fibreuse est un mélange de fibres de cellulose et de fibres d'un polyester ou un mélange de fibres de cellulose et de fibres de triacétate de cellulose.

17. Procédé selon la revendication 16 caractérisé en ce que l'on opère avec en plus un colorant de dispersion.